# EUROPEAN PATENT SPECIFICATION

(11) **EP 4 118 346 B1**
(45) Date of publication and mention of the grant of the patent: **21.05.2025**
(21) Application number: 20833901.0
(22) Date of filing: 22.12.2020
(51) Int. Cl.: F16B 12/20, F16B 12/24

(54) **IMPROVED JOINING DEVICE FOR FURNITURE PARTS AND FURNISHING ACCESSORIES**
VERBESSERTE VERBINDUNGSVORRICHTUNG FÜR MÖBELTEILE UND MÖBELZUBEHÖR
DISPOSITIF D'ASSEMBLAGE AMÉLIORÉ POUR PARTIES DE MEUBLES ET ACCESSOIRES D'AMEUBLEMENT

(30) Priority: 10.03.2020 IT 202000005086
(43) Date of publication of application: 18.01.2023
(73) Proprietor: Effegi Brevetti S.r.l., 20090 Segrate MI (IT)
(72) Inventor: GIOVANNETTI, Antonio Sergio, 20090 Segrate MI (IT)
(74) Representative: Petruzziello, Aldo
(86) International application number: PCT/EP2020/087617
(87) International publication number: WO 2021/180353

(56) References cited:
- EP-A1- 3 766 384
- WO-A1-2018/015090
- WO-A2-01/98596
- SE-A1- 1 300 329
- SE-C2- 537 054

## Description

The present invention relates to an improved joining device for furniture parts and furnishing accessories.

More specifically, the present invention relates to a device suitable for assembling furniture and/or furnishing accessories such as shelves, bookcases, drawer units, bed frames, seats and the like.

As is known, furniture and furnishing accessories are increasingly made by stably and unmovably joining together single parts that will go to define the overall assembly represented, for example, by a bookcase or a shelf, a chair or any other furnishing accessory not made in a single piece but defined by an assembly of single parts.

Such a "kit" structure entails considerable advantages linked, for example, to an ease of transport of even bulky structures, to the possibility of assembling the furniture item directly on site or, likewise, to the possibility of transport and assembly also by non-expert users.

The retaining elements used to join together the different components or individual parts of the furniture are defined, for example, by tie-rods or bushings, cams and similar means.

Referring by way of example to a bookcase or shelf-type item of furniture, it typically comprises two vertical uprights, tendentially parallel one in relation to the other, between which are interposed, along a plane perpendicular to the plane of longitudinal development of the uprights, one or more shelves having the function of defining a plane of resting and support for books, magazines, vases and/or other multiple and different objects.

The assembly of the frame structure and the shelves with respect to said frame can be carried out using retaining means represented by bushings or cams inserted in the thickness of the shelves (or of the uprights) and co-operating in clamping with corresponding pins or screws inserted in the uprights (or in the shelves) and which, actuated by means of a suitable tool (screwdriver or Allen key or the like), determine the rotation of the bushing or cam so as to realise the constraint of said pin or screw with respect to said bushing or cam.

However, these means of clamping or constraint involve some major disadvantages linked to the need to make slots for the housing of the components in co-operation (bushing and screw or pin) in the thickness of the parts in reciprocal coupling (both in the shelves and uprights).

Furthermore, said clamping means involve longer assembly times, since the operator must insert the bushing or cam and the screw or pin in the respective seats and then act on the screw or pin to create the clamping.

In order to remedy these disadvantages, other removable joining methods have been developed that provide for the use of expansion joints suitable for insertion in the thickness of the uprights or of the shelves, with said joints that comprise an expansion bushing typically made of plastic material and a screw inserted coaxially to said bushing and, also, a cam bushing inserted in a slot formed in the thickness of one of the parts to be joined and suitable for coupling with the screw or pin of the expansion joint. The reciprocal clamping between the two components of the furniture item is carried out by means of a tool which acts on the cam bushing and which, rotating, forces a backward movement of the pin with respect to the bushing in which the pin is inserted with a consequent radial expansion of the bushing itself.

However, these traditional expansion joints also entail some major disadvantages linked to the fact that they comprise elements to be inserted in both parts to be assembled with the consequent need to create suitable seats and grooves in said parts of the furniture.

A further disadvantage is linked to the longer assembly times, in that the user must insert the expansion joint elements in the seats of the parts to be connected and subsequently has to act on the cam bushing to impose the movement of the pin and the consequent expansion of the bushing in its seat.

A further disadvantage is represented by the fact that a possible loosening of the cam bushing involves a consequent movement of the pin and a return into the non-expanded position of the bushing of the pin and this may cause an inevitable loosening of the clamping constraint between the parts of the furniture item.

Joining devices have also been proposed that allow a simultaneous fastening to the two parts of the furniture item to be connected.

Such a device is, for example, described in EP 3436710 A1 and comprises a casing or container body designed to be inserted, with the respective ends, in seats formed in the components of the furniture item to be joined. The casing is made in two parts that are firmly restrained one to the other and encloses in its interior a cam mechanism that acts on actuation means, such as a slide or slider that causes the expansion of components placed at the end of the casing.

This device, although it solves the problems of the joining devices described above, has the disadvantage of being made up of several separate components housed in the casing, which makes the device expensive and complex to assemble, as well as affecting its long-term reliability.

WO 01/98596 discloses an elongated fastener for securing a pair of panels together. Each end of the fastener comprises an expansible end portion thereon which is arranged to be received within a bore in a respective panel. A wedge member is mounted within each expansible end portion for longitudinal sliding movement between a disengaged position and an engaged position wherein the expansible end portions are expanded relative to the disengaged position. An actuator is located centrally between the expansible end portions for pivotal movement about an actuator axis. Other joining devices and methods are known from SE 1 300 329 A1 and WO 2018/015091 A1.

The object of the present invention is to overcome the abovementioned disadvantages. In particular, one object of the invention is to provide a joining device for parts of furniture and furnishing accessories that is made up of the smallest possible number of components and is therefore economical and fast and easy to assemble.

Another object of the present invention is to provide such a joining device that is highly reliable, guaranteeing excellent clamping between the parts to be assembled without any risk of loosening.

These and other objects are achieved by the device according to the invention which has the features of the appended claim 1.

Advantageous embodiments of the invention are disclosed by the dependent claims.

The constructional and functional features of the joining device for parts of furniture or furnishing accessories of the present invention will be made clearer by the following detailed description in which reference is made to the accompanying drawings which illustrate an embodiment thereof given solely by way of a nonlimiting example and in which:
Figure 1 shows schematically an axonometric view of a blow-up of the joining device of parts of furniture or furnishing accessories of the present invention;

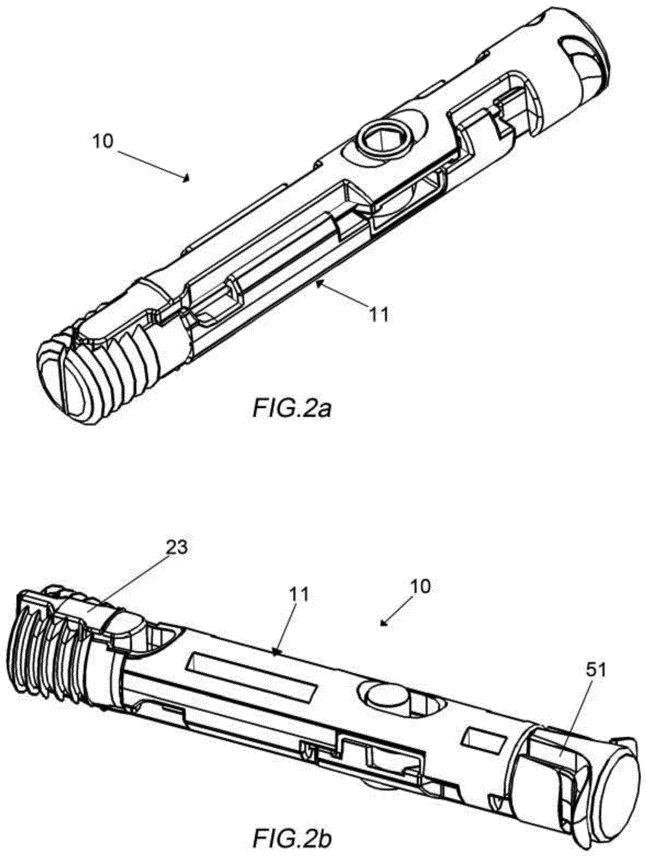

Figures 2a and 2b schematically show an axonometric view, respectively from above and from below, of the device of the invention assembled and shown with the expansion means in closed and expanded condition, respectively;

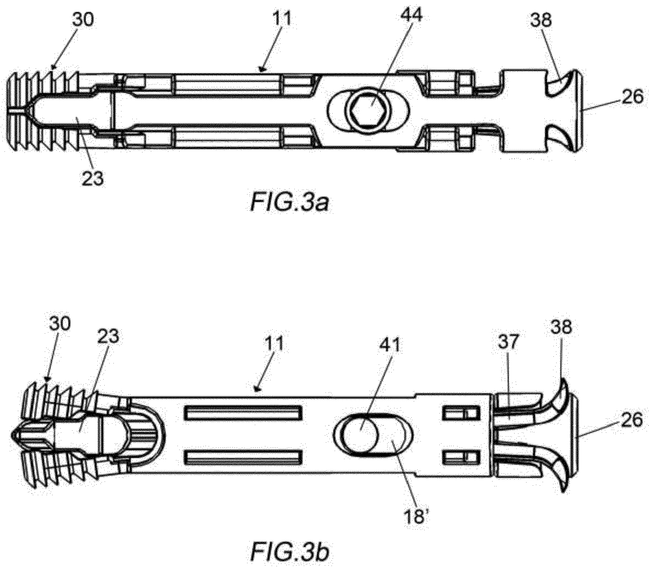

Figures 3a and 3b are plan views, respectively from above and below, of the assembled device, with the expansion means in closed and expanded condition, respectively;
Figures 4a and 4b, are axonometric views, partially sectioned, of the device shown in the condition of Figures 2a, 3a and 2b, 3b, respectively, with the actuation tool that allows to pass from one condition to another;
Figure 5 schematically shows an axonometric view of a furniture item assembled using joining devices of the invention, in which the furniture item is partially sectioned to illustrate the arrangement of one of said joining devices;
Figures 6 and 7 are enlargements of the detail enclosed in a circle in Figure 5, showing two phases of clamping between the parts of the furniture item after coupling of the same.

Referring to the aforementioned drawings, the joining device for parts of furniture or furnishing accessories of the present invention, denoted overall by reference numeral 10, is substantially made up of a casing 11, made in two parts 12, 14, between which a cam mechanism 40 is interposed, whose actuation allows a predetermined axial sliding between said parts 12, 14, as will be explained here below.

The casing 11 is substantially cylindrical in shape, and the two parts 12, 14 here below for the sake of convenience will also be referred to as half-shells, respectively upper half-shell 12 and lower half-shell 14 with reference to the accompanying drawings, although their configuration is substantially different, as will be seen here below. The half-shells 12 and 14 are made in materials of different hardness for the purposes that are to be stated. In particular, the lower half-shell 14 is in a plastic that has a certain flexibility, while the upper half-shell 12 is in metal, in particular zamak, or also in a hard plastic. Here below the two half-shells 12 and 14 will be indicated in metal and plastic, respectively.

The two half-shells are joined one to the other by means of a snap-fit type connection, i.e. with slotting means, without using fastening means, so as to allow the aforementioned axial sliding between the two.

The upper metal half-shell 12 has a somewhat thinned shape, with a widened median section 13, at which a circular through hole 18 is provided, which is contrasted by an axially elongated through hole 18', provided in the lower plastic half-shell 14.

On one side and on the other side of the widened section 13 respective recesses 15, 16 are provided, at which respective horizontal edges 21, 22 are provided, extending for at least part of the length of the recesses, with which they go to engage respective hook sections of shorter length 31, 32 of the lower half-shell 14, with the possibility of sliding on said edges 15, 16 which act as guide rails. The coupling between the hook sections 31, 32 and the edges 21, 22 also allows the two half-shells to be held firmly together.

The recess 15 of the upper half-shell 12, which is longer than recess 16, ends with a wedge end 23, which develops downwards and is inserted in a cavity 33 of an expansion bushing 30 made up of two opposing wings 34 separated one from the other along a vertical plane and provided externally with indentations 35, developing in a circumferential direction. The two wings 34 of the expansion bushing 30, which develop around cavity 33, in resting or non-expanded condition, come into contact at their outermost ends.

Below the recess 15, which is obviously provided at both sides of the upper half-shell 12, a longitudinal rib 24 is provided, centrally, which is inserted in a corresponding groove 36 provided in the bottom wall of the lower half-shell 14, so as to constitute additional guide means between the two half-shells.

The other recess 16, also obviously provided at both sides of the upper half-shell 12, ends instead with a substantially cylindrical head 25, appropriately grooved, so as to present a frontal closure disc 26 which is connected, by means of opposing chamfered sections 27, to a central vertical wall 28 having a step 29.

The peripheral wall of the cylindrical head 25 has two lateral, radial, opposed slits 50 at said chamfered sections 27 connected to two lower longitudinal slits 51, so as to determine said frontal closure disc 25 and said vertical wall 28.

Correspondingly, the lower half-shell 14 has two divergent tongues 37, with chamfered ends 38, designed to be placed in said grooved head 25 of the upper half-shell 12. In particular, the tongues 37 are inserted in said longitudinal slits 51 and the chamfered ends 38 in said radial slits 50, coupling perfectly with the chamfered sections 27 of said frontal disc 26.

Before the assembly of the two half-shells 12, 14 of the casing 11, the aforementioned cam mechanism 40 is interposed between them, which has a lower cylindrical section 41, an upper cylindrical section 42, of slightly larger diameter, and a central section 43 projecting radially, determining a cam profile.

The lower section 41 is designed to be inserted, with the possibility of axial sliding, in said slotted hole 18' provided on the bottom wall of the lower half-shell 14, while the upper cylindrical section 42 goes to be housed without play in the circular hole 18 provided in the upper half-shell 12. The central section with cam profile 43 is placed instead in a seat 60 of the lower half-shell 14, open at both sides, and delimited longitudinally by opposing shoulders 61, 62, against which the cam profile 43 acts. If necessary, said shoulders 61, 62 can be part of a perforated U-shaped metal plate 65, as shown in the drawings, should it be necessary to stiffen the structure.

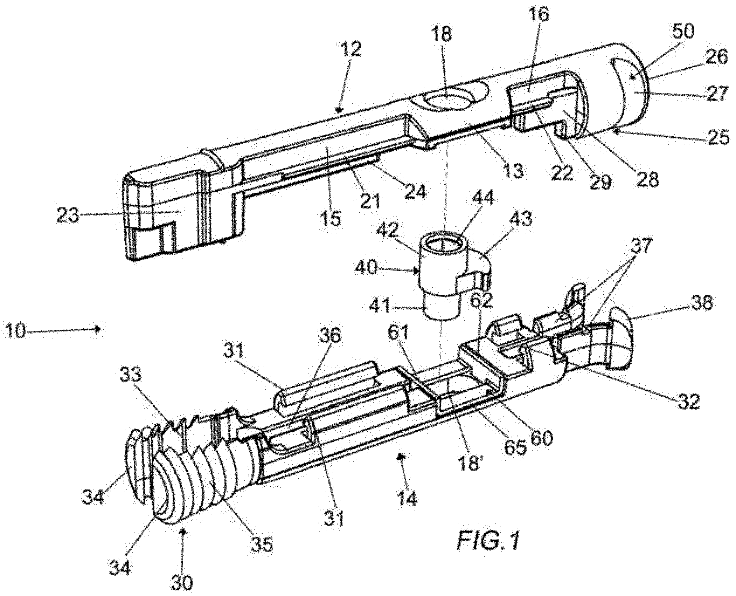

In the upper cylindrical section 42 a shaped seat 44 is provided, designed to accommodate a tool 70 (not shown in Figure 1) for the actuation of the cam mechanism as will be described here below.

The shaped seat 44 could optionally be replaced by a shaped through hole to allow the actuation of the cam both from above and from below.

In this respect, it should be noted that the terms 'lower' and 'upper' used in this description are referred to the arrangement shown in the drawings, as the joining device may be mounted upside down in the furniture parts to be joined with respect to what is shown, to allow actuation of the cam from below, and therefore in a less visible position.

The assembly of the joining device 10 according to the invention takes place simply by assembling the two half-shells 12, 14 of the casing 11 with the cam mechanism 40 interposed between them, which is allowed by the elasticity of the hook sections 31, 32 of the lower half-shell 14, which go to snap-engage with the edges 21, 22 of the upper half-shell 12.

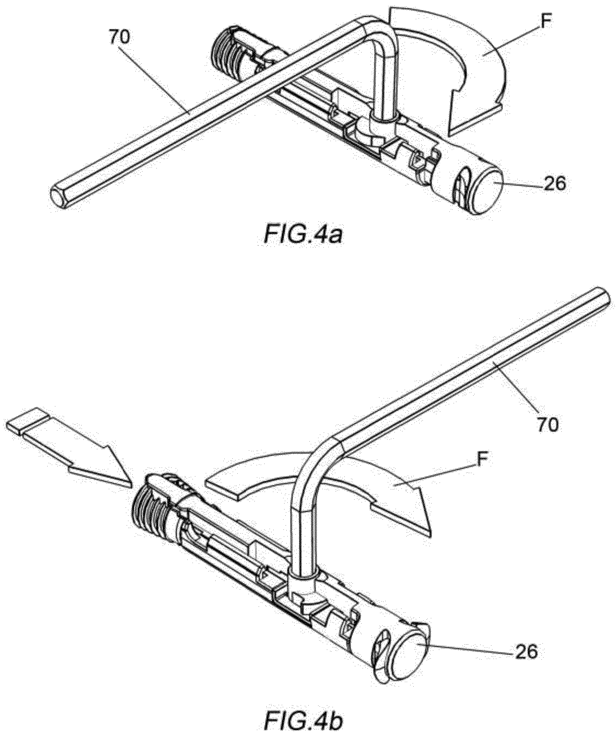

The functioning of the joining device according to the invention is now illustrated, with particular reference to Figures 4a and 4b.

In the present description, the front end or part of the device is indicated as that where the flexible tongues 37 and the hollow head 50 are provided, placed on the right in the drawings, and the rear end or part that where the expansion bushing 30 and the wedge-shaped end 23 are provided.

Figure 4a shows the rest configuration, or non-expanded configuration, of the device with tool 70 inserted in seat 44 of the cam mechanism 40.

In this configuration, the lower half-shell 14 is held in the more backward position, i.e. at the rear end of the casing 10, by the cam profile 43 which acts with its most protruding part against the shoulder 61 of the seat 60 housing the cam mechanism, formed in the lower half-shell 14.

Figure 4b shows the final expanded configuration of the joining device of the invention, which is achieved by actuating in rotation the cam mechanism 40 by means of tool 70 so as to bring the cam profile 43 to act against the shoulder 62 opposed to the shoulder 61, causing the forward movement of the lower half-shell 14. In the drawings a rotation of 180° clockwise is provided, indicated by the arrows F. On the basis of the shape and arrangement of the cam, however, it would be possible to obtain the same result with a different angle of rotation and/or a rotation in the opposite direction to the previous one.

During the forward movement of the lower half-shell 14, the two tongues 37 spread apart, sliding with their chamfered ends 38 on the corresponding chamfered sections 27 of the frontal disc 26 of the hollow head 25 of the upper half-shell 12. In this way, the chamfered ends 38 of the tongues 37, expanding, determine the locking of the device in one of the two parts of the furniture item to be joined.

At the same time, the two wings 34 of the expansion bushing 30, sliding on the wedge-shaped end 23 of the upper half-shell 12, spread apart, causing, with their indentations 35, the locking of the upper part of the furniture item to be joined and at the same time exerting a certain traction on the same.

In this way a stable clamping of the parts of the furniture item to be joined is obtained.

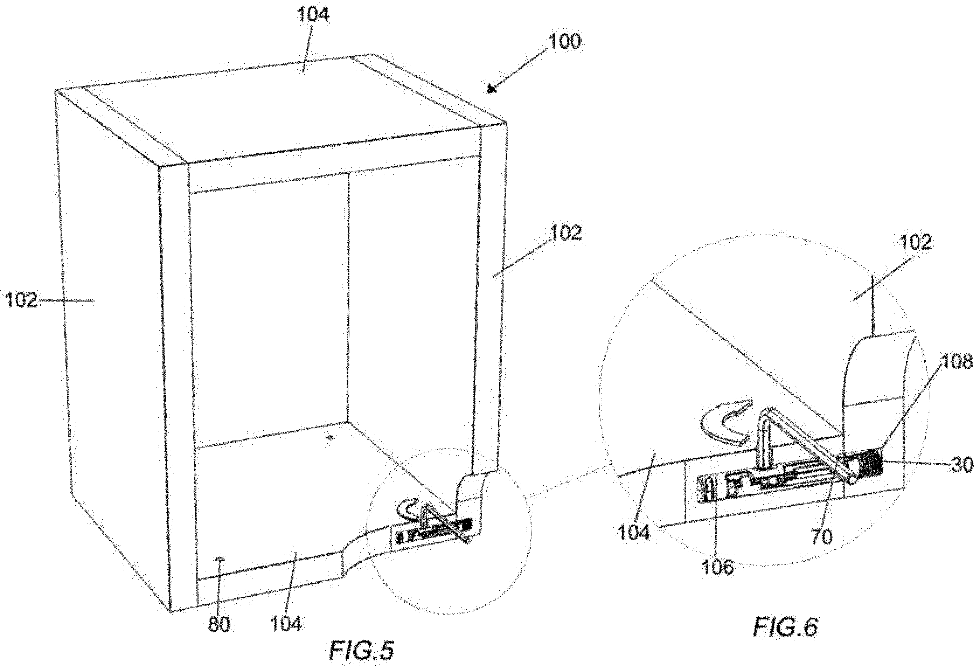

Figures 5 - 7 show an example of furniture item assembled using joining devices 10 according to the invention.

Figure 5 shows an axonometric view of a furniture item 100 comprising two opposite and parallel shoulders 102, and two shelves 104 interposed between said opposite shoulders, perpendicular to them and parallel to each other.

In the thickness of the shelves 104 slots or pockets 106 are formed having the function of housing the joining devices 10 of the invention, inserted in said slots or pockets with the rear portion bearing the expansion bushing 30 which protrudes externally from said pocket and is designed to fit into a further pocket 108 formed in the thickness of the shoulders 102.

As can be seen in Figure 5, in shelves 104 holes 80 are also provided, formed perpendicularly to the axis of the slots or pockets 66 having the function of allowing the insertion of tool 70 which couples with the shaped seat 44 of the cam mechanism 40 to carry out the clamping action.

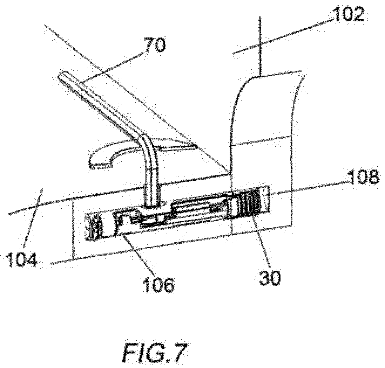

Figures 6 and 7 show two enlarged details of a portion of furniture item 100 assembled using the joining device of the invention, and in which device 10, inserted in a slot or pocket 106 of a shelf 104, is shown in the rest configuration with the expansion bushing 30 inserted in the pocket 108 of the shoulder 102 of the furniture item (detail in Figure 6), and in the final configuration in which the expansion bushing, following the expansion and traction action exerted by the reciprocal sliding between the half-shells 12 and 14, carries out the clamping with respect to the walls of pocket 108 and, consequently, the rigid and stable connection of shelf 104 with respect to shoulder 102.

In fact, during the rotation of the cam mechanism 40 the expansion of the tongues 37 is imposed with consequent locking of device 10 of the slot or pocket 106 in shelf 64, and the simultaneous expansion and retraction of the expansion bushing 30, which carries out a clamping action with radial stress with respect to the slot or pocket 108 with simultaneous traction stress between the two components of the furniture item, in this way defining a stable clamping between the parts without risk of loosening of the constraint.

The possible disassembly of the furniture item can be carried out by imposing, by means of tool 70, a rotation in the opposite direction to that of the assembly/clamping phase, so as to bring the device into the rest configuration. In this case, if desired, device 10 can also be extracted from the slot or pocket 106 of the shelf, where it is no longer constrained for the return into non-expanded position of the two opposing tongues 37.

The advantages of the joining device according to the invention are clear from the above, which is practically made up of only three components: the two half-shells 12, 14 that form the casing 11 and the cam mechanism 40 interposed between the two. Optionally, the metal reinforcement plate 65 can be provided in the seat 60 for housing of the cam mechanism 40.

This constitutes a considerable simplification with respect to the known solutions that required a certain number of components inside the casing of the device in order to be able to achieve the expansion of the respective ends.

Naturally the invention is not limited to the particular embodiment previously described and illustrated in the accompanying drawings, but numerous detailed changes may be made thereto within the reach of the person skilled in the art, without thereby departing from the scope of the invention itself defined by the annexed claims.

## Claims

1. Joining device (10) for parts of furniture and furnishing accessories, such as shelves, bookcases, drawer units, bed frames, seats and the like, comprising a casing (11), made of two half-shells (12, 14), and expansion means (37, 38; 30) provided at the opposite ends of the casing (11), suitable for being inserted in corresponding seats (106, 108) of the two parts to be joined to produce locking thereof following the expansion, said expansion means being actuated by a cam mechanism (40) interposed between said half-shells (12, 14) of the casing (11), and pass from a rest, or non-expanded, configuration to an expanded configuration and vice versa, following a relative sliding between said half-shells caused by said cam mechanism (40), **characterised in that** said expansion means are an integral part of one of said half-shells, and **in that** said half-shells are made with materials of different hardness, a first (14) thereof, bearing said expansion means, being of softer material and having a certain elasticity, so as to snap-fit to a second (12) of said half-shells.

2. Joining device according to claim 1, wherein said first half-shell (14) is in plastic material and said second half-shell (12) in metal material, or they are both in plastic material of different hardness.

3. Joining device according to claim 1 or 2, **characterised in that** said expansion means (30) provided at one end of said first half-shell (14) are an expansion bush consisting of opposing wings (34), provided with indentations (35), which expand and retract by engagement with a corresponding wedge-shaped end (23) of said second half-shell (12), and said expansion means (37, 38) provided at the other end of the first half-shell (14) are opposing tongues (37) with chamfered ends (38), which engage with corresponding chamfered portions (27) of a hollow head (25) provided at the other end of the second half-shell (12).

4. Joining device according to any one of claims 1 to 3, wherein said cam mechanism (40) has a first cylindrical end section (41) housing with play in a slot (18') provided in the first half-shell (14), a second cylindrical end section (42) housing without play in a circular hole (18) provided in said second half-shell (12), and a central section (43) with cam profile, housing in a seat (60) of the half-shell (12) and designed to come into contact with axially opposing shoulders (61, 62) of the seat (60) to produce said relative movement between the half-shells.

5. Joining device according to claim 4, **characterised in that** a U-shaped perforated metal plate (65) is placed in said seat (60).

6. Joining device according to claim 4 or 5, **characterised in that** said cam mechanism (40) comprises a seat (44), optionally through and shaped to allow the introduction of a tool (70) apt to actuate the rotation of said cam mechanism (40).

7. Joining device according to any one of claims 1 to 6, **characterised in that** said first half-shell (14) has coupling sections (31, 32) suitable for engaging with respective edges (21, 22), provided on the second half-shell (12), acting as guide rails for reciprocal sliding.

8. Method of joining parts of modular furniture (100) or furnishing accessories by means of the joining device (10) according to any one of the preceding claims, comprising the following steps:
- insertion of the joining device (10) in a groove or pocket (106) formed in the thickness of one of the components to be joined, with the expansion bushing (30), provided at one of its ends, protruding externally to said groove or pocket (106) and designed to be inserted in a further pocket (108) formed in the thickness of the other component to be joined;
- actuation in rotation of the cam mechanism (40) to cause a relative movement between the half-shells (12, 14) of the casing (11) of the device and to impose an expansion and retraction of the bushing (30) to exert a radial pressure and traction action on the internal surface of said groove or pocket (108) and simultaneous expansion of the expansion means (37, 38) provided at the other end of the device to exert a radial pressure action on the internal surface of said groove or pocket (106).

## Patentansprüche

1. Verbindungsvorrichtung (10) für Teile von Möbeln und Einrichtungszubehör, wie Regale, Bücherschränke, Schubladeneinheiten, Bettrahmen, Sitze und dergleichen, mit einem Gehäuse (11), das aus zwei Halbschalen (12, 14) besteht, und Ausdehnungsmitteln (37, 38; 30), die an den gegenüberliegenden Enden des Gehäuses (11) vorgesehen sind und geeignet sind, in entsprechende Sitze (106, 108) der zwei zu verbindenden Teile eingesetzt zu werden, um deren Verriegelung nach der Ausdehnung zu bewirken, wobei die Ausdehnungsmittel durch einen Nockenmechanismus (40) betätigt werden, der zwischen den Halbschalen (12, 14) des Gehäuses (11) angeordnet ist, und von einer Ruhe- oder nicht ausgedehnten Konfiguration in eine ausgedehnte Konfiguration und umgekehrt übergehen, nach einem relativen Gleiten zwischen den Halbschalen, das durch den Nockenmechanismus (40) verursacht wird, **dadurch gekennzeichnet, dass** die Ausdehnungsmittel ein integraler Bestandteil einer der Halbschalen sind und dadurch, dass die Halbschalen aus Materialien unterschiedlicher Härte hergestellt sind, wobei eine erste (14) davon, die die Ausdehnungsmittel trägt, aus einem weicheren Material besteht und eine gewisse Elastizität aufweist, so dass sie in eine zweite (12) der Halbschalen einrastet.

2. Verbindungsvorrichtung nach Anspruch 1, wobei die erste Halbschale (14) aus Kunststoff und die zweite Halbschale (12) aus Metall besteht oder beide aus Kunststoff unterschiedlicher Härte bestehen.

3. Verbindungsvorrichtung nach Anspruch 1 oder 2, **dadurch gekennzeichnet, dass** die Ausdehnungsmittel (30), die an einem Ende der ersten Halbschale (14) vorgesehen sind, eine Ausdehnungsbuchse sind, die aus gegenüberliegenden Flügeln (34) besteht, die mit Einkerbungen (35) versehen sind, die sich durch Eingriff mit einem entsprechenden keilförmigen Ende (23) der zweiten Halbschale (12) ausdehnen und zurückziehen, und die Ausdehnungsmittel (37, 38), die an dem anderen Ende der ersten Halbschale (14) vorgesehen sind, gegenüberliegende Zungen (37) mit abgeschrägten Enden (38) sind, die mit entsprechenden abgeschrägten Abschnitten (27) eines hohlen Kopfes (25) in Eingriff stehen, der an dem anderen Ende der zweiten Halbschale (12) vorgesehen ist.

4. Verbindungsvorrichtung nach einem der Ansprüche 1 bis 3, wobei der Nockenmechanismus (40) einen ersten zylindrischen Endabschnitt (41), der mit Spiel in einem in der ersten Halbschale (14) vorgesehenen Schlitz (18') aufgenommen ist, einen zweiten zylindrischen Endabschnitt (42), der ohne Spiel in einem in der zweiten Halbschale (12) vorgesehenen kreisförmigen Loch (18) aufgenommen ist, und einen mittleren Abschnitt (43) mit Nockenprofil aufweist, der in einem Sitz (60) der Halbschale (12) aufgenommen ist und dazu bestimmt ist, mit axial gegenüberliegenden Schultern (61, 62) des Sitzes (60) in Kontakt zu kommen, um die relative Bewegung zwischen den Halbschalen zu erzeugen.

5. Verbindungsvorrichtung nach Anspruch 4, **dadurch gekennzeichnet, dass** eine U-förmige perforierte Metallplatte (65) in dem Sitz (60) angeordnet ist.

6. Verbindungsvorrichtung nach Anspruch 4 oder 5, **dadurch gekennzeichnet, dass** der Nockenmechanismus (40) einen Sitz (44) umfasst, der gegebenenfalls durchgehend und so geformt ist, dass er die Einführung eines Werkzeugs (70) ermöglicht, das geeignet ist, die Drehung des Nockenmechanismus (40) zu betätigen.

7. Verbindungsvorrichtung nach einem der Ansprüche 1 bis 6, **dadurch gekennzeichnet, dass** die erste Halbschale (14) Kupplungsabschnitte (31, 32) aufweist, die geeignet sind, mit jeweilige Kanten (21, 22) einzugreifen, die an der zweiten Halbschale (12) vorgesehen sind und als Führungsschienen für ein gegenseitiges Gleiten dienen.

8. Verfahren zum Verbinden von Teilen von modularen Möbeln (100) oder Einrichtungszubehör mittels der Verbindungsvorrichtung (10) nach einem der vorhergehenden Ansprüche, umfassend die folgenden Schritte:
- Einsetzen der Verbindungsvorrichtung (10) in eine Nut oder Tasche (106), die in der Dicke eines der zu verbindenden Bauteile ausgebildet ist, wobei die an einem dessen Enden vorgesehene Ausdehnungshülse (30) aus der Nut oder Tasche (106) nach außen ragt und dazu bestimmt ist, in eine weitere Tasche (108) eingesetzt zu werden, die in der Dicke des anderen zu verbindenden Bauteils ausgebildet ist;
- Betätigung des Nockenmechanismus (40) in Drehung, um eine Relativbewegung zwischen den Halbschalen (12, 14) des Gehäuses (11) der Vorrichtung zu bewirken und eine Ausdehnung und ein Zurückziehen der Buchse (30) zu erzwingen, um eine radiale Druck- und Zugwirkung auf die Innenfläche der Nut oder Tasche (108) auszuüben, sowie gleichzeitige Ausdehnung der am anderen Ende der Vorrichtung vorgesehenen Ausdehnungsmittel (37, 38), um eine radiale Druckwirkung auf die Innenfläche der Nut oder Tasche (106) auszuüben.

## Revendications

1. Dispositif d'assemblage (10) de pièces de meubles et d'accessoires d'ameublement, tels que des étagères, des bibliothèques, des blocs-tiroirs, des cadres de lit, des sièges et similaires, comprenant un boîtier (11), constitué de deux demi-coques (12, 14), et des moyens d'expansion (37, 38 ; 30) situés au niveau d'extrémités opposées du boîtier (11), pouvant être insérés dans les sièges correspondants (106, 108) des deux pièces à assembler pour produire leur verrouillage suite à l'expansion, lesdits moyens d'expansion étant actionnés par un mécanisme à came (40) interposé entre lesdites demi-coques (12, 14) du boîtier (11), et passant d'une configuration de repos, ou non expansée, à une configuration expansée et vice-versa, suite à un glissement relatif entre lesdites demi-coques provoqué par ledit mécanisme à came (40), **caractérisé en ce que** lesdits moyens d'expansion font partie intégrante de l'une desdites demi-coques, et **en ce que** lesdites demi-coques sont réalisées avec des matériaux de dureté différente, une première (14) d'entre elles, portant lesdits moyens d'expansion, étant en matériau plus mou et présentant une certaine élasticité, de manière à s'encliqueter sur une seconde (12) desdites demi-coques.

2. Dispositif d'assemblage selon la revendication 1, dans lequel ladite première demi-coque (14) est en matière plastique et ladite seconde demi-coque (12) en matière métallique, ou dans une matière plastique de dureté différente.

3. Dispositif d'assemblage selon la revendication 1 ou 2, **caractérisé en ce que** lesdits moyens d'expansion (30) prévus au niveau d'une extrémité de ladite première demi-coque (14) sont une douille d'expansion constituée d'ailes opposées (34), pourvues d'indentations (35), qui s'étendent et se rétractent par engagement avec une extrémité correspondante en forme de coin (23) de ladite seconde demi-coque (12), et lesdits moyens d'expansion (37, 38) prévus au niveau de l'autre extrémité de la première demi-coque (14) sont des languettes opposées (37) avec des extrémités chanfreinées (38), qui s'engagent dans des parties chanfreinées correspondantes (27) d'une tête creuse (25) prévue au niveau de l'autre extrémité de la seconde demi-coque (12).

4. Dispositif d'assemblage selon l'une quelconque des revendications 1 à 3, dans lequel ledit mécanisme à came (40) présente une première section d'extrémité cylindrique (41) logée avec jeu dans une fente (18') prévue dans la première demi-coque (14), une seconde section d'extrémité cylindrique (42) logée sans jeu dans un trou circulaire (18) prévu dans ladite seconde demi-coque (12), et une section centrale (43) à profil de came, logée dans un siège (60) de la demi-coque (12) et conçue pour entrer en contact avec des épaulements (61, 62) axialement opposés du siège (60) afin de produire ledit mouvement relatif entre les demi-coques.

5. Dispositif d'assemblage selon la revendication 4, **caractérisé en ce qu'**une plaque métallique perforée en forme de U (65) est placée dans ledit siège (60).

6. Dispositif d'assemblage selon la revendication 4 ou 5, **caractérisé en ce que** ledit mécanisme à came (40) comprend un siège (44), éventuellement traversé et formé pour permettre l'introduction d'un outil (70) pouvant actionner la rotation dudit mécanisme à came (40).

7. Dispositif d'assemblage selon l'une quelconque des revendications 1 à 6, **caractérisé en ce que** ladite première demi-coque (14) présente des sections d'accouplement (31, 32) pouvant s'engager dans les bords respectifs (21, 22), prévus sur la seconde demi-coque (12), agissant comme des rails de guidage pour le glissement réciproque.

8. Procédé d'assemblage de pièces de meubles modulaires (100) ou d'accessoires d'ameublement au moyen du dispositif d'assemblage (10) selon l'une quelconque des revendications précédentes, comprenant les étapes suivantes :
- l'insertion du dispositif d'assemblage (10) dans une rainure ou poche (106) formée dans l'épaisseur de l'un des composants à assembler, la douille d'expansion (30), prévue au niveau de l'une de ses extrémités, faisant saillie à l'extérieur de ladite rainure ou poche (106) et conçue pour être insérée dans une autre poche (108) formée dans l'épaisseur de l'autre composant à assembler ;
- l'actionnement en rotation du mécanisme à came (40) pour provoquer un mouvement relatif entre les demi-coques (12, 14) du boîtier (11) du dispositif et pour imposer une expansion et une rétraction de la douille (30) afin d'exercer une action de pression radiale et de traction sur la surface interne de ladite rainure ou poche (108) et une expansion simultanée des moyens d'expansion (37, 38) prévus au niveau de l'autre extrémité du dispositif pour exercer une action de pression radiale sur la surface interne de ladite rainure ou poche (106).
